# EUROPEAN PATENT APPLICATION

(11) **EP 3 240 254 A1**
(43) Date of publication of application: **01.11.2017**
(21) Application number: 15871463.4
(22) Date of filing: 30.01.2015
(51) Int. Cl.: H04L 29/06

(54) **DUAL-SYSTEM SWITCH BASED DATA SECURITY PROCESSING METHOD AND APPARATUS**

(30) Priority: 24.12.2014 CN 201410817232
(71) Applicant: Yulong Computer Telecommunication Scientific (Shenzhen) Co., Ltd., Shenzhen, Guangdong 518057 (CN)
(72) Inventor: WANG, Gaofeng, Shenzhen Guangdong 518057 (CN); SUN, Liang, Shenzhen Guangdong 518057 (CN)
(74) Representative: Kolster Oy Ab
(86) International application number: PCT/CN2015/071969
(87) International publication number: WO 2016/101384

(57) **Abstract**

A dual-system switch based data security processing method, comprising: monitoring an operation event to be conducted by a terminal under a first operating system (S10); determining whether the operation event has preset security property information (S20); if so, switching current first operating system to a second operating system and conducting the operation event under the second operating system (S21). Also disclosed is a dual-system switch based data security processing apparatus. The above method and apparatus realize an automatic switch between the dual-system, quickly identify user private data and automatically switch to the second operating system to protect the data and prevent the user private data from being revealed.

## Description

The present application claims the priority to Chinese Patent Application No.201410817232.6, titled "DUAL-SYSTEM SWITCH BASED DATA SECURITY PROCESSING METHOD AND APPARATUS", filed on December 24, 2014 with the State Intellectual Property Office of the People's Republic of China, which is incorporated herein by reference in its entirety.

### FIELD

The present disclosure relates to the field of mobile communication terminal, and in particular to a data security processing method and a data security processing apparatus based on switch in a dual system.

### BACKGROUND

With the rapid development of mobile communication terminal, privacy leakage becomes a problem urgently required to be solved. Particularly, data leakage in a communication tool, such as a mobile phone, has been commonplace and brings a great deal of trouble to users. Presently, an intelligent terminal, such as a mobile phone, is provided with a common operating system configured to process daily operations and a security operating system configured to process security operations. However, a user has to initiate an active switching operation in order to switch between the two systems, and the intelligent terminal having the dual system adopts hardware switches, which increases the cost of the dual system. Moreover, this passive switching mode depends on subjective judgment and operations of the user, and operations are complicated. An efficient way has not been proposed for sensitive or important information to quickly switch to a security operating system for processing. Therefore, there is a risk for important information and data to be intercepted by illegal programs.

The above content is only to assist in understanding the technical solutions of the present disclosure and does not mean that the above content are recognized as the conventional art.

### SUMMARY

The main object of the present disclosure is to provide a data security processing method based on switch in a dual system, aimed at solving the technical problems that switch in a dual system in a conventional communication intelligent terminal is not convenient, and user private data can not be automatically recognized.

To achieve the above object, a data security processing method based on switch in a dual system is provided according to the present disclosure. The data security processing method based on switch in the dual system includes: monitoring an operation event to be performed by a terminal in a first operating system; determining whether the operation event includes preset security attribute information; and switching the current first operating system to a second operating system and performing the operation event in the second operating system, in a case that the operation event includes the security attribute information.

Preferably, the dual system includes the first operating system without a preset security strategy and the second operating system with the preset security strategy.

Preferably, the operation event is a communication event, and the determining whether the operation event includes the preset security attribute information includes: determining whether a communication number corresponding to the communication event includes the security attribute information; or determining whether communication data in performing the communication event includes the security attribute information.

Preferably, the security attribute information includes a preset encryption communication number, a cipher feature and a preset keyword.

Preferably, the switching the current first operating system to the second operating system and performing the operation event in the second operating system in a case that the operation event includes the security attribute information includes: switching the current first operating system to the second operating system, in a case that the operation event includes the security attribute information; determining a type of an application scenario of the operation event in the second operating system; and invoking a security mode corresponding to the type of the application scenario and performing the operation event in the security mode.

In addition, in order to achieve the above object, a data security processing apparatus based on switch in a dual system is provided according to the present disclosure. The data security processing apparatus based on switch in the dual system includes: a monitoring module, configured to monitor an operation event to be performed by a terminal in a first operating system; a determining module, configured to determine whether the operation event includes preset security attribute information; and a processing module, configured to switch the current first operating system to a second operating system and perform the operation event in the second operating system in a case that the operation event includes the security attribute information.

Preferably, the dual system includes the first operating system without a preset security strategy and the second operating system with the preset security strategy.

Preferably, the operation event is a communication event, and the determining module is configured to determine whether a communication number corresponding to the communication event includes the security attribute information, or determine whether communication data in performing the communication event includes the security attribute information.

Preferably, the security attribute information includes a preset encryption communication number, a cipher feature and a preset keyword.

Preferably, the processing module is configured to switch the current first operating system to the second operating system in a case that the operation event includes the security attribute information, determine a type of an application scenario of the operation event in the second operating system, and invoke a security mode corresponding to the type of the application scenario and perform the operation event in the security mode.

According to the present disclosure, an operation event to be performed by a terminal is monitored in a first operating system, and it is determined whether the operation event includes preset security attribute information. In a case that the operation event includes the security attribute information, the current first operating system is switched to a second operating system and the operation event is performed in the second operating system. The whole process requires no manual operations of users and is quite convenient and timely, and important private data will not be leaked. In addition, there is no need to provide hardware to control switch for system, thereby reducing the cost.

### BRIEF DESCRIPTION OF THE DRAWINGS

Figure 1 is a schematic flow chart of a data security processing method based on switch in a dual system according to an embodiment of the present disclosure;
Figure 2 is a schematic flow chart of a detailed step S20 in the data security processing method based on switch in a dual system shown in Figure 1;
Figure 3 is a schematic structural diagram of a data security processing apparatus based on switch in a dual system according to an embodiment of the present disclosure;
Figure 4 is a schematic structural diagram of a first operating system according to the present disclosure; and
Figure 5 is a schematic structural diagram of a second operating system according to the present disclosure.

The implementations of the object, functional characteristics and advantages of the present disclosure will be further described in conjunction with embodiments and in reference to drawings.

### DETAILED DESCRIPTION

It should be understood that, the described embodiments are only to explain, but not to limit the present disclosure.

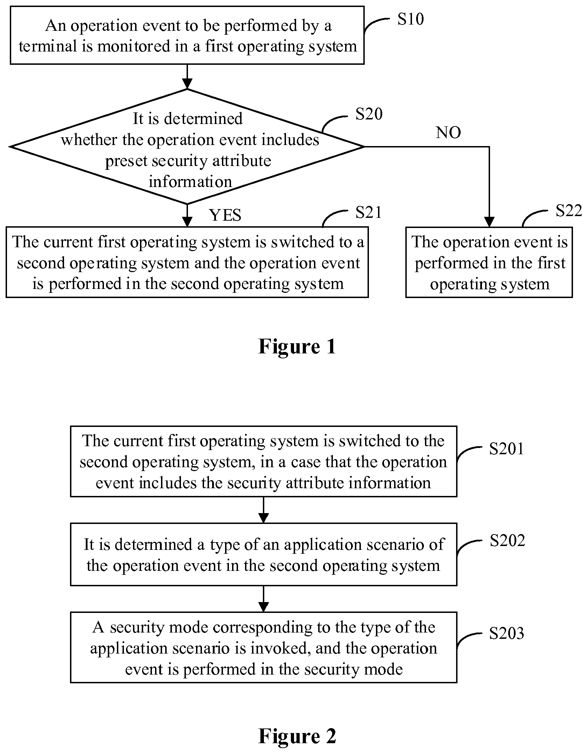

A data security processing method based on switch in a dual system is provided according to the present disclosure. Reference is made to Figure 1, which is a schematic flow chart of a data security processing method based on switch in a dual system according to an embodiment of the present disclosure. As shown in Figure 1, the data security processing method based on switch in the dual system according to the embodiment includes step S10 to step S22.

In step S10, an operation event to be performed by a terminal is monitored in a first operating system.

The terminal is an intelligent mobile communication terminal, such as an intelligent phone. The terminal is provided with a dual system, and the dual system includes the first operating system without a preset security strategy and the second operating system with the preset security strategy. The first operating system and the second operating system are independent with each other, and the terminal may switch between first the operating system and the second operating system. The first operating system is mainly applied to daily functions, such as game applications, browsers and cameras, and provides primary protection for these applications. The second operating system can process sensitive data safely or perform security communications. A security level of the second operating system is higher than that of the first operating system.

In order to protect an event including security private information and avoid data being stolen in the first operating system via trojan programs by others, security protection is required before performing the operation event. The operation event may be an operation initiated by the terminal or triggered externally, such as receiving external transmission data, making a call, sending a mail, or editing information.

In step S20, it is determined whether the operation event includes preset security attribute information. Step S21 is performed in a case that the operation event includes the preset security attribute information, and step S22 is performed in a case that the operation event does not include the preset security attribute information.

In step S21, the current first operating system is switched to a second operating system and the operation event is performed in the second operating system.

In step S22, the operation event is performed in the first operating system.

The security attribute information may be included in the system, or defined by a user. The user may establish a security attribute information feature library and prestore the security attribute information in the security attribute information feature library. The security attribute information feature library may be provided in the first operating system or in the second operating system and is generally provided in the first operating system. In the embodiment, preferably, a same security attribute information feature library is provided in both the first operating system and the second operating system, the terminal directly searches for the security attribute information corresponding to another operation event in the security attribute information feature library in the second operating system in a case that the terminal does not log out from the second operating system and the another operation event occurs, repeat switching between the first operating system and the second operating system is avoided. The security attribute information includes a preset encryption communication number, a cipher feature and a preset keyword. When the user sets the security attribute information, the user prestores the security attribute information of objects requiring to be protected in the terminal. When the operation event to be performed by the terminal is monitored, attribute features for the operation event is parsed, and it is determined whether the attribute features for the operation event is matched with the prestored security attribute information. In a case that the attribute features for the operation event is matched with the prestored security attribute information, it is determined that the operation event includes private data requiring to be protected, and the terminal switches to the second operating system to process the event to protect the security of data. It may be readily understood that, in a case that the operation event does not include the preset security attribute information, the operation event is performed in the first operating system.

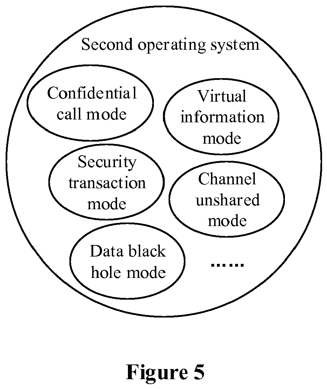

To better illustrate the concept and the technical effects of the present disclosure, the embodiment is further described hereinafter in detail in conjunction with Figure 2, Figure 4, Figure 5 and specific application scenarios.

It may be understood that, in the above embodiment, in a case that the operation event to be performed by the terminal is a communication event, step S20 maybe further implemented as follows. Specifically, step S20 includes: determining whether a communication number corresponding to the communication event includes the security attribute information; or determining whether communication data in performing the communication event includes the security attribute information. The communication event includes receiving or making a call, receiving or sending a message and receiving or sending a mail. In the embodiment, in a case that the communication event is receiving or making a call, it is determined whether a dialed or received number is the preset encryption communication number. In a case that the dialed or received number is the preset encryption communication number, the current first operating system is switched to the second operating system to make a call to ensure the security of a secret-related call. In a case that the dialed or received number is not the preset encryption communication number, the call is made in the first operating system. Switching a system during a call does not influence a call quality. It may be understood that, security private data in the terminal can not be easily stolen by others remotely due to the protection of the second operating system.

It should be noted that, in a case that the dialed or received number is not the preset encryption communication number and it is monitored that security attribute fields occur in the call content during the call, the terminal automatically switches to the second operating system to make a call to ensure the security of the secret-related call, which greatly improves the comprehensiveness of protecting user privacy. In a case that the dialed or received number is not the preset encryption communication number and it is monitored that the security attribute fields do not occur in the call content during the call, the call is made in the first operating system.

In a case that the communication event is sending a message or mail, the user may first determine a recipient or write message content or mail content. In a case that the user first determines the recipient, it is determined timely whether a mobile phone number and a mail address of the recipient are the preset encryption communication numbers after the recipient is determined. In a case that the mobile phone number and the mail address of the recipient are the preset encryption communication numbers, the current first operating system is switched to the second operating system, and the message content or mail content is written in the second operating system. In a case that the mobile phone number and the mail address of the recipient are not the preset encryption communication numbers, the message content or the mail content is written in the first operating system. In a case that the user first writes the message content or mail content, information content inputted by the user is monitored. In a case that the message content or mail content written by the user includes the preset keyword, the current first operating system is switched to the second operating system, and the user continues writing the message content or the mail content in the second operating system, and sends the message or the mail in the second operating system to protect private data of the user in time. The preset keyword is defined by the user, and may be a name, a number included in a picture, or a number occurring in a video. Similarly, when the user edits document information or memorandum information, the current first operating system is switched to the second operating system and the user continues editing the information and saving the information in the second operating system in a case that the edited content includes the preset keyword.

In addition, in a case that the operation event to be performed by the terminal is the cipher feature, that is, password information or verification code information requires to be inputted by a user, step S20 may further be implemented as follows. It is determined whether the received information, mail, or data in a website includes the cipher feature, such as the password or the verification code, when the terminal receives data. In a case that the received data includes the cipher feature, the current first operating system is switched to the second operating system and the password or the verification code is inputted in the second operating system to protect the cipher information inputted by the user from being obtained by others via trojans or the like. In a case that the received data does not include the cipher feature, the password or the verification code is inputted in the first operating system.

It may be understood that, to better protect user's security privacy, in the embodiment, a security protection mode corresponding a type of the application scenario of the operation event is set to further protect user privacy. Reference is made to Figure 2. Step S20 includes step S201 to step S203. In step S201, the current first operating system is switched to the second operating system, in a case that the operation event includes the security attribute information. In step S202, it is determined a type of an application scenario of the operation event in the second operating system. In step S203, a security mode corresponding to the type of the application scenario is invoked, and the operation event is performed in the security mode.

In the embodiment, the type of the application scenario is set based on a generality of a type of operation events. For example, both online shopping or transferring accounts need a password operation, and both the two operation events belong to a transaction behavior. A security transaction mode may be configured to protect accounts, passwords and verification codes in an online transaction or identity verification. In such way, when a user performs any password operations, the security transaction mode is automatically entered, thereby, protecting the security of a user's bank card account, or a virtual account, such as a game account. In addition, in the embodiment, there is a data black hole mode, a confidential call mode, a virtual information mode, and a channel unshared mode, etc. The data black hole mode is that data can only be processed in the system and can not be shared, transmitted or copied to the outside. The confidential call mode is used in a secret-related call to ensure the call not to be intercepted. The virtual information mode is to perform virtualization processing on secret-related data to protect private data in public places, and the virtualization processing is to replace the secret-related data with specific symbols, to enable the secret-related data to be a string of symbols in the first operating system, and enable the secret-related data to be normally displayed only in the second operating system in the virtual information mode. The channel unshared mode is that the system only permits one process to occupy data transmission channels and shields the other data channels, when transmitting private data.

Based on the above protection modes, in the embodiment, in a case that the operation event to be performed by the terminal is a call, the confidential call mode may be adopted. When a businessman makes a call to an important customer to discuss trade secret information, a processing module analyses whether a phone number has the security attribute information in the security attribute information feature library and determines whether the call content is matched with the security attribute information. In a case that the phone number has the security attribute information or the call content is matched with the security attribute information, the terminal automatically switches to the confidential call mode of a security system for this scenario to make a call, thereby, protecting the call content from being intercepted.

A virtual information mode is adopted in a case that the operation event to be performed by the terminal is editing information including editing a message or a mail; when a monitoring module monitors that the security attribute information in the security attribute information feature library occurs in the message or the mail edited by a user, a processing module switches the current first operating system to the second operating system, the virtual information mode is entered, and virtualization processing is performed on secret-related data. Even if other person steals the information from the terminal, he can not see the secret-related data. In a case that an information receiver uses a dual system mobile phone as well, the information receiver can see the information content processed by the virtualization processing only by entering into the second operating system and the virtual information mode. In a case that the information receiver uses an ordinary single system mobile phone, the information content processed by the virtualization processing is displayed.

In a case that the operation event to be performed by the terminal is to input password information or verification code information, the security transaction mode may be adopted. In a case that an application (such as mailbox, WeChat or online payment) used by a user requires to verify user's identity, a server will issue data, such as a verification code, or a dynamic password. When a monitoring module monitors the information, a processing module is triggered to search for and matches the security attribute information for the information. In a case that the information is matched with the security attribute information, the terminal automatically switches to the security transaction mode of the security system, displays the information to the user for reading and performs related processing, thereby, avoiding a risk of secret-related data in a common system being intercepted by programs such as trojan.

It may be understood that, the present disclosure further improves protection of user's security private data by setting the security protection mode corresponding to the operation event in a second operating system. In addition, the second operating system may also set a starting password for further protection.

In summary, in the method provided according to the present disclosure, an operation event to be performed by a terminal is monitored in a first operating system, and it is determined whether the operation event includes preset security attribute information. In a case that the operation event includes the security attribute information, the current first operating system is switched to a second operating system and the operation event is performed in the second operating system. The whole process requires no manual operations of users and is quite convenient and timely, and important private data will not be leaked. In addition, there is no need to provide hardware to control switch for system, thereby reducing the cost.

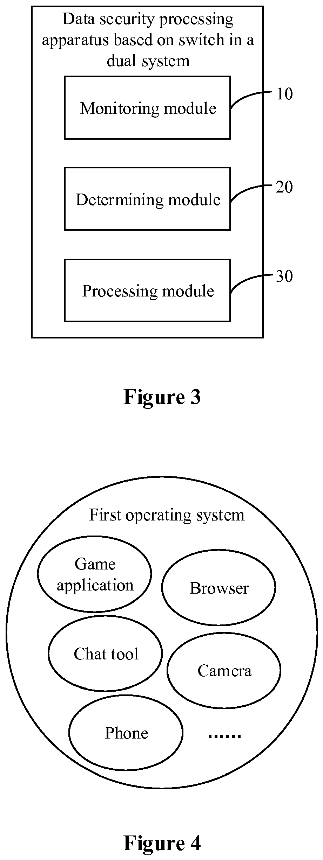

Correspondingly, a data security processing apparatus based on switch in a dual system is provided according to the present disclosure. Reference is made to Figure 3, which is a schematic structural diagram of a data security processing apparatus based on switch in a dual system according to an embodiment of the present disclosure. As shown in Figure 3, the data security processing apparatus based on switch in the dual system according to the embodiment includes: a monitoring module 10, a determining module 20 and a processing module 30.

The monitoring module 10 is configured to monitor an operation event to be performed by a terminal in a first operating system.

The terminal is an intelligent mobile communication terminal, such as an intelligent phone. The terminal is provided with a dual system, and the dual system includes the first operating system without a preset security strategy and the second operating system with the preset security strategy. The first operating system and the second operating system are independent with each other, and the terminal may switch between first the operating system and the second operating system. The first operating system is mainly applied to daily functions, such as game applications, browsers and cameras, and provides primary protection for these applications. The second operating system can process sensitive data safely or perform security communications. A security level of the second operating system is higher than that of the first operating system.

In order to protect an event including security private information and avoid data being stolen in the first operating system via trojan programs by others, security protection is required before performing the operation event. The operation event may be an operation initiated by the terminal or triggered externally, such as receiving external transmission data, making a call, sending a mail, or editing information.

The determining module 20 is configured to determine whether the operation event includes preset security attribute information.

The processing module 30 is configured to: switch the current first operating system to a second operating system and perform the operation event in the second operating system in a case that the determining module 20 determines that the operation event includes the preset security attribute information; perform the operation event in the first operating system in a case that the determining module 20 determines that the operation event does not include the preset security attribute information.

The security attribute information may be included in the system, or defined by a user. The user may establish a security attribute information feature library and prestore the security attribute information in the security attribute information feature library. The security attribute information feature library may be provided in the first operating system or in the second operating system and is generally provided in the first operating system. In the embodiment, preferably, a same security attribute information feature library is provided in both the first operating system and the second operating system, the terminal directly searches for the security attribute information corresponding to another operation event in the security attribute information feature library in the second operating system in a case that the terminal does not log out from the second operating system and the another operation event occurs, repeat switching between the first operating system and the second operating system is avoided. The security attribute information includes a preset encryption communication number, a cipher feature and a preset keyword. When the user sets the security attribute information, the user prestores the security attribute information of objects requiring to be protected in the terminal. When the operation event to be performed by the terminal is monitored, attribute features for the operation event is parsed, and it is determined whether the attribute features for the operation event is matched with the prestored security attribute information. In a case that the attribute features for the operation event is matched with the prestored security attribute information, it is determined that the operation event includes private data requiring to be protected, and the terminal switches to the second operating system to process the event to protect the security of data. It may be readily understood that, in a case that the operation event does not include the preset security attribute information, the operation event is performed in the first operating system.

To better illustrate the concept and the technical effects of the present disclosure, the embodiment is further described hereinafter in detail in conjunction with Figure 3, Figure 4, Figure 5 and specific application scenarios.

It may be understood that, in the above embodiment, in a case that the operation event to be performed by the terminal is a communication event, the determining module 20 may be further implemented as follows. Specifically, the determining module 20 is configured to determine whether a communication number corresponding to the communication event includes the security attribute information, or the determining module 20 is configured to determine whether communication data in performing the communication event includes the security attribute information. The communication event includes receiving or making a call, receiving or sending a message and receiving or sending a mail. In the embodiment, in a case that the communication event is receiving or making a call, it is determined whether a dialed or received number is the preset encryption communication number. In a case that the dialed or received number is the preset encryption communication number, the current first operating system is switched to the second operating system to make a call to ensure the security of a secret-related call. In a case that the dialed or received number is not the preset encryption communication number, the processing module 30 does not switch, the call is made in the first operating system. Switching a system during a call does not influence a call quality. It may be understood that, security private data in the terminal can not be easily stolen by others remotely due to the protection of the second operating system.

It should be noted that, in a case that the dialed or received number is not the preset encryption communication number and it is monitored that security attribute fields occur in the call content during the call, the terminal automatically switches to the second operating system to make a call to ensure the security of the secret-related call, which greatly improves the comprehensiveness of protecting user privacy. In a case that the dialed or received number is not the preset encryption communication number and it is monitored that the security attribute fields do not occur in the call content during the call, the call is made in the first operating system.

In a case that the communication event is sending a message or mail, the user may first determine a recipient or write message content or mail content. In a case that the user first determines the recipient, it is determined timely whether a mobile phone number and a mail address of the recipient are the preset encryption communication numbers after the recipient is determined. In a case that the mobile phone number and the mail address of the recipient are the preset encryption communication numbers, the current first operating system is switched to the second operating system, and the message content or mail content is written in the second operating system. In a case that the mobile phone number and the mail address of the recipient are not the preset encryption communication numbers, the message content or the mail content is written in the first operating system. In a case that the user first writes the message content or mail content, information content inputted by the user is monitored. In a case that the message content or mail content written by the user includes the preset keyword, the current first operating system is switched to the second operating system, and the user continues writing the message content or the mail content in the second operating system, and sends the message or the mail in the second operating system to protect private data of the user in time. The preset keyword is defined by the user, and may be a name, a number included in a picture, or a number occurring in a video. Similarly, when the user edits document information or memorandum information, the current first operating system is switched to the second operating system and the user continues editing the information and saving the information in the second operating system in a case that the edited content includes the preset keyword.

In addition, in a case that the operation event to be performed by the terminal is the cipher feature, that is, password information or verification code information requires to be inputted by a user, the determining module 20 may further be implemented as follows. The determining module 20 is configured to determine whether the received information, mail, or data in a website includes the cipher feature, such as the password or the verification code, when the terminal receives data. In a case that the received data includes the cipher feature, the processing module 30 switches the current first operating system to the second operating system and the password or the verification code is inputted in the second operating system to protect the cipher information inputted by the user from being obtained by others via trojans or the like. In a case that the received data does not include the cipher feature, the processing module 30 does not switch, the password or the verification code is inputted in the first operating system.

It may be understood that, to better protect user's security privacy, in the embodiment, a security protection mode corresponding a type of the application scenario of the operation event is set to further protect user privacy. Reference is made to Figure 2. The processing module 30 is configured to switch the current first operating system to the second operating system in a case that the operation event includes the security attribute information, determine a type of an application scenario of the operation event in the second operating system, and invoke a security mode corresponding to the type of the application scenario and perform the operation event in the security mode.

In the embodiment, the type of the application scenario is set based on a generality of a type of operation events. For example, both online shopping or transferring accounts need a password operation, and both the two operation events belong to a transaction behavior. A security transaction mode may be configured to protect accounts, passwords and verification codes in an online transaction or identity verification. In such way, when a user performs any password operations, the security transaction mode is automatically entered, thereby, protecting the security of a user's bank card account, or a virtual account, such as a game account. In addition, in the embodiment, there is a data black hole mode, a confidential call mode, a virtual information mode, and a channel unshared mode, etc. The data black hole mode is that data can only be processed in the system and can not be shared, transmitted or copied to the outside. The confidential call mode is used in a secret-related call to ensure the call not to be intercepted. The virtual information mode is to perform virtualization processing on secret-related data to protect private data in public places, and the virtualization processing is to replace the secret-related data with specific symbols, to enable the secret-related data to be a string of symbols in the first operating system, and enable the secret-related data to be normally displayed only in the second operating system in the virtual information mode. The channel unshared mode is that the system only permits one process to occupy data transmission channels and shields the other data channels, when transmitting private data.

Based on the above protection modes, in the embodiment, in a case that the operation event to be performed by the terminal is a call, the confidential call mode may be adopted. When a businessman makes a call to an important customer to discuss trade secret information, a processing module analyses whether a phone number has the security attribute information in the security attribute information feature library and determines whether the call content is matched with the security attribute information. In a case that the phone number has the security attribute information or the call content is matched with the security attribute information, the terminal automatically switches to the confidential call mode of a security system for this scenario to make a call, thereby, protecting the call content from being intercepted.

A virtual information mode is adopted in a case that the operation event to be performed by the terminal is editing information including editing a message or a mail; when a monitoring module monitors that the security attribute information in the security attribute information feature library occurs in the message or the mail edited by a user, a processing module switches the current first operating system to the second operating system, the virtual information mode is entered, and virtualization processing is performed on secret-related data. Even if other person steals the information from the terminal, he can not see the secret-related data. In a case that an information receiver uses a dual system mobile phone as well, the information receiver can see the information content processed by the virtualization processing only by entering into the second operating system and the virtual information mode. In a case that the information receiver uses an ordinary single system mobile phone, the information content processed by the virtualization processing is displayed.

In a case that the operation event to be performed by the terminal is to input password information or verification code information, the security transaction mode may be adopted. In a case that an application (such as mailbox, WeChat or online payment) used by a user requires to verify user's identity, a server will issue data, such as a verification code, or a dynamic password. When a monitoring module monitors the information, a processing module is triggered to search for and matches the security attribute information for the information. In a case that the information is matched with the security attribute information, the terminal automatically switches to the security transaction mode of the security system, displays the information to the user for reading and performs related processing, thereby, avoiding a risk of secret-related data in a common system being intercepted by programs such as trojan.

It may be understood that, the present disclosure further improves protection of user's security private data by setting the security protection mode corresponding to the operation event in a second operating system. In addition, the second operating system may also set a starting password for further protection.

In summary, in the apparatus provided according to the present disclosure, the monitoring module 10 monitors an operation event to be performed by a terminal in a first operating system, and the determining module 20 determines whether the operation event includes preset security attribute information. In a case that the operation event includes the security attribute information, the processing module 30 switches the current first operating system to a second operating system and perform the operation event in the second operating system. The whole process requires no manual operations of users and is quite convenient and timely, and important private data will not be leaked. In addition, there is no need to provide hardware to control switch for system, thereby reducing the cost.

The number in the above embodiments according to the present disclosure is only for description, and does not indicate advantages or disadvantages of the embodiments. According to the description of the above embodiments, it may be clearly understood by those skilled in the art that, the methods in the above embodiments may be implemented by means of software and a necessary general hardware platform, or by means of hardware, but the former is a more preferred implementation. Based on this understanding, the essence of the technical solutions of the present disclosure or the part of the present disclosure contributing to the conventional art can be embodied in the form of a software product. The computer software product is stored in a storage medium (such as ROM, RAM, a disk, or a CD) and includes some instructions configured to enable a terminal device (a mobile phone, a computer, a server, or a network device) to implement the methods described in all the embodiments of the present disclosure.

The foregoing embodiments are only preferred embodiments of the present disclosure and are not meant to limit the present disclosure. All equivalent structures, equivalent variations made according to the specification and drawings of the present disclosure, or directly or indirectly applying to other related technical fields shall fall in the protection scope of the present disclosure.

## Claims

1. A data security processing method based on switch in a dual system, comprising:
monitoring an operation event to be performed by a terminal in a first operating system;
determining whether the operation event comprises preset security attribute information; and
switching the current first operating system to a second operating system and performing the operation event in the second operating system, in a case that the operation event comprises the security attribute information.

2. The data security processing method based on switch in the dual system according to claim 1, wherein the dual system comprises the first operating system without a preset security strategy and the second operating system with the preset security strategy.

3. The data security processing method based on switch in the dual system according to claim 1, wherein the operation event is a communication event, and the determining whether the operation event comprises the preset security attribute information comprises:
determining whether a communication number corresponding to the communication event comprises the security attribute information; or
determining whether communication data in performing the communication event comprises the security attribute information.

4. The data security processing method based on switch in the dual system according to claim 3, wherein the security attribute information comprises a preset encryption communication number, a cipher feature and a preset keyword.

5. The data security processing method based on switch in the dual system according to any one of claims 1 to 4, wherein the switching the current first operating system to the second operating system and performing the operation event in the second operating system in a case that the operation event comprises the security attribute information comprises:
switching the current first operating system to the second operating system, in a case that the operation event comprises the security attribute information;
determining a type of an application scenario of the operation event in the second operating system; and
invoking a security mode corresponding to the type of the application scenario and performing the operation event in the security mode.

6. A data security processing apparatus based on switch in a dual system, comprising:
a monitoring module, configured to monitor an operation event to be performed by a terminal in a first operating system;
a determining module, configured to determine whether the operation event comprises preset security attribute information; and
a processing module, configured to switch the current first operating system to a second operating system and perform the operation event in the second operating system in a case that the operation event comprises the security attribute information.

7. The data security processing apparatus based on switch in the dual system according to claim 6, wherein the dual system comprises the first operating system without a preset security strategy and the second operating system with the preset security strategy.

8. The data security processing apparatus based on switch in the dual system according to claim 6, wherein the operation event is a communication event, and the determining module is configured to determine whether a communication number corresponding to the communication event comprises the security attribute information, or determine whether communication data in performing the communication event comprises the security attribute information.

9. The data security processing apparatus based on switch in the dual system according to claim 8, wherein the security attribute information comprises a preset encryption communication number, a cipher feature and a preset keyword.

10. The data security processing apparatus based on switch in the dual system according to any one of claims 6 to 9, wherein the processing module is configured to switch the current first operating system to the second operating system in a case that the operation event comprises the security attribute information, determine a type of an application scenario of the operation event in the second operating system, and invoke a security mode corresponding to the type of the application scenario and perform the operation event in the security mode.
